# EUROPEAN PATENT SPECIFICATION

(11) **EP 2 003 853 B1**
(45) Date of publication and mention of the grant of the patent: **04.04.2018**
(21) Application number: 07110357.6
(22) Date of filing: 15.06.2007
(51) Int. Cl.: H04L 29/08

(54) **Method for managing functions of a mobile phone during a browsing session, remote gateway and remote phone managing unit**
Verfahren zur Verwaltung der Funktionen eines Mobiltelefons während einer Suchsitzung, Ferngateway und Fernverwaltungseinheit für das Telefon
Procédé de gestion des fonctions d'un téléphone mobile au cours d'une session de navigation, passerelle à distance et unité de gestion de téléphone à distance

(43) Date of publication of application: 17.12.2008
(73) Proprietor: Vodafone GmbH, 40549 Düsseldorf (DE)
(72) Inventor: Martin, Maurice, 3620, Ianaken (BE)
(74) Representative: Cullinane, Marietta Bettina

(56) References cited:
- EP-A- 1 056 253
- EP-A- 1 098 504
- US-A1- 2002 112 063
- US-A1- 2003 074 672
- "Wireless Application Protocol - Wireless Telephony Application Specification - Version 1.1" WAP WTA APPROVED VERSION, XX, XX, 16 July 1999 (1999-07-16), pages 19-23,27, XP002184984

## Description

The present invention relates to a method for managing functions of a mobile phone during a browsing session, a remote gateway and to a remote phone management unit.

Mobile phones are increasingly being used as terminals to access the Internet. For this purpose browser applications are stored on mobile phones, which can communicate in a Wireless Application Environment (WAE) via the so called Wireless Application Protocol (WAP) with an access node or access point of the Internet, in particular a remote gateway. Such a mobile phone for accessing the Internet is for example described in EP 1 056 253 B1.

As mobile phones differ from other terminals of the Internet, such as PCs, in processing power and / or memory space, websites have been developed to only provide content which can be displayed on mobile phones. An additional feature of these websites may be options or links, which use functions of the mobile phone, such as making a call or sending an SMS. The access to the websites on the Internet and the management of the phone functions according to options or links on a webpage is carried out by a browser application installed on the mobile phone. These browsers are also referred to as micro-browsers.

One disadvantage of this browsing solution using a browser installed on the mobile phone for browsing the Internet is that the execution of a browser application on the phone, also with a mirco-browser, still requires a considerable amount of processing power and/or memory space on the mobile phone. The overall processing power and/or memory space of mobile devices, such as mobile phones is, however, limited and the processing time for processing browsing requests and loading content may result in an unsatisfying user experience.

Thin client technologies, such as Microsoft RDP or Citrix, overcome this disadvantage, as all content which is browsed via this thin client technology, e.g. from the Internet or a corporate domain, will be executed on a remote display gateway. While addressing the problem of processing power and memory space, this thin client based browsing technology has disadvantages when being used from a mobile device. The content and the browser application will be handled at the remote display gateway. Hence, the functions of the mobile phone, which may be included in options or links of a webpage will not be available at the remote gateway and in particular not within the browser application on the remote gateway. Hence, a user accessing the Internet from his mobile phone will not be able to benefit from the additional functionalities provided at websites relating to phone functions.

US 2003/074672 A1 describes a multiuser internet gateway system. In this system a display content source is accessed by a gateway server for obtaining display content including images of hyperlinked information. The location of images of the hyperlinked information is determined to map the images of the hyperlinked information to a remote display screen. That means that the images of the hyperlinks are mapped to the location of where they will be displayed on the remote display screen. Thereby a user can activate a displayed hyperlink by clicking on the image of the hyperlinked information. The remote display screen will detect the screen location and will generate a user input signal. This user input signal is wirelessly transmitted and received by the gateway server. A function to be performed is determined in response to the user input signal by comparing the user input signal with stored mapped hyperlink data. The gateway server then performs the determined function. Also this system does not enable a user who is accessing the Internet from his mobile phone to benefit from functionalities relating to phone functions on a website.

In EP 1 098 504 A2 the establishment of conference calls to wireless terminals by a data network server is described. In this method conference-related information is received and a conference notification message is sent to wireless terminals. This approach, however, does not enable a user who is accessing the Internet from his mobile phone to benefit from functionalities relating to phone functions on a website.

US 2002/112063 A1 discloses the transmission of requests for execution of WTA protocol based actions by a mobile terminal from a server. The WTA protocol based functions may include the initiation of a phone call from a mobile terminal. A request must be provided by a user to a so called request centre, which may then communicate the request to a server. Hence, also this document does not enable a user who is accessing the Internet from his mobile phone to benefit from functionalities relating to phone functions on a website.

The problem underlying the present invention is thus to provide a solution for improved user experience when using browsing applications from a mobile device, in particular a mobile phone.

According to a first aspect, the problem is solved by a method for managing functions of a mobile phone during a browsing session; wherein the browsing session is executed at a browser unit of a remote gateway but controlled by the mobile phone. The method is characterized in that the remote gateway identifies information related to phone functions within the content of a website of the Internet when loading the website and in that the remote gateway upon detection of a selection signal from the mobile phone directed to an option relating to phone functions within the content of the website triggers a remote phone management unit to manage the phone function by generating and/or transmitting a command message to the mobile phone.

A browsing session according to the present invention is a session, wherein content on remote servers is being accessed. Preferably, the browsing session is an Internet browsing session. It is however also possible to browse other networks such as an intranet. The remote gateway serves as an access point to the net to be browsed.

The browser unit is preferably a unit at the remote gateway, where a browser application is executed. The browser application and/or unit will hereinafter also be referred to as the browser.

The mobile phone to be used in the present invention is preferably a device, which communicates with entities of a communication network, especially the Internet. The mobile phone can thus be any mobile device capable of accessing the Internet or Intranet. As such, mobile phone may be a mobile or cellular phone. It may, however, also be a PDA being connected to the communication network via a network such as GSM or UMTS.

The remote gateway comprises or represents a remote display gateway, which serves for delivering display data to the mobile phone. The remote display gateway is preferably part of the remote gateway, but may also be a separate entity which is connected to the remote gateway. On the remote gateway, in particular on the remote display gateway a server based application is installed, which preferably is a browser for browsing web sites on the Internet. The remote display gateway also serves for receiving and processing requests from the mobile phone. These requests are being issued by the mobile phone from within a thin client application on the mobile phone.

The thin client application, which will hereinafter also be referred to as the thin client, is preferably a program installed on mobile phone for remote access to a server based application installed on the remote gateway for display of the user interface of the server based application on the mobile phone. The requests, which can be issued by the mobile phone, hence, include selections of options displayed on the mobile phone. The mobile phone with the thin client application installed thereon serves as a mere input and output device for a server based application running on the remote gateway.

Phone functions according to the present invention are functions which require components, programs or data from the mobile phone in order to be executed.

Preferably, these functions are native phone functions such as initiating a phone call or sending a message, e.g. a DTMF Tone, an SMS, an MMS or an email. Additional phone functions may be functions such as accessing a registry on the mobile phone, e.g. a phone book or a calendar. The information related to these phone functions, which is to be identified is preferably a command to initiate one or more of these functions. The information may be included in link information within the content of a website.

By identifying information related to phone functions at the remote gateway, preferably by the browser being executed at the remote gateway, it will be possible to handle these functions differently from other functions relating to for example browsing or display features. The separate handling of the information relating to phone functions is beneficial, as the mobile phone, where these functions will be available is only being used to control the browser on the remote gateway, but is not available to perform these functions at the remote gateway.

As a browser, when loading the content of a website parses, e.g. performs a semantic analysis and interprets the content in order to be able to process it adequately, no additional processing step is necessary when performing the inventive method. The information related to phone functions can be identified when parsing the content.

Information related to phone functions according to one embodiment of the invention will be identified by tags within the content of the website. These tags are generally implemented in the content of the web-site and can hence be used for the inventive method without requiring additional processing of the webpage.

The tags to be identified, i.e. the tags relating to information on phone functions may be stored in a memory of the browser application at the remote gateway. When parsing content of a website and detecting a tag, the browser can compare the detected tag with tags stored. If the detected tag matches a stored tag, the browser can handle the content of the tag differently, in particular will not generate an error message.

Alternatively, it is also possible, that the tags relating to the phone functions are not stored at the browser. In this case, the browser, while parsing the content of the website will merely identify the tags. Once a user selects the link related to this tag, the browser will notice that the tag and/or the related phone functions are not supported. Instead of generating an error message, the browser may treat the tag differently. In particular an event may be generated for the unsupported tag / function.

Upon detection of a selection signal from the mobile phone directed to an option relating to phone functions within the content of the website, the remote gateway triggers a remote phone management unit to manage the phone function.

The selection signal from the mobile phone may be in particular the selection of a link on the website. The signal will be generated within the thin client, which converts actions taken at the mobile phone into respective requests or commands as input for the browser at the remote gateway. The option will be a link where the respective command for the phone function is attached or linked to. When selecting such a link, the browser may generate an event on the parsed tag of the selected link and thereby trigger a remote phone management unit to manage the phone function. The triggering of the remote phone management unit will be realized by generating an event at the browser and transmitting the event to the remote phone management unit. It is advantageous, if the browser only triggers the remote phone management once the user selects a link relating to the phone functions, as the signalling between the browser and the remote phone management unit can be kept to a minimum.

The remote gateway may generate an event for every tag which is not supported by the browser and will transmit the event to the phone management unit. This advantageous as only the output of the browser and not the general settings of the browser have to be changed. In this case, the phone management unit will parse the received event and will, based on preconfigured settings either generate an error message or will generate a command message. The preconfigured settings may be a definition or list of tags or functions, for which a command message should be generated.

The remote phone management unit generates and/or transmits a command message to the mobile phone, when triggered by the browser unit. The remote phone management unit may preferably parse the content and depending on the parsing success, generate a respective command message for the mobile phone. If the parsing failed, that means that the tag and or function is not supported, i.e. is not managed by the remote phone management unit. In this case, a command message may be generated and transmitted to the browser, whereby a respective error message can be displayed to the user via the remote display client on the mobile phone. Alternatively, the error message may be sent directly to the mobile phone. If the parsing is successful, the generated command message will include information on the phone function as originally selected. In addition, information on the mobile phone to which the command message is to be transmitted may be included in the command message. The information on the mobile phone will be available at the remote phone management unit, as this unit is connected to the browser, which is being accessed by the mobile phone via a thin client application.

The command message may be transmitted from the remote phone management unit via a push proxy gateway to the mobile phone. By using WAP push as a transmission channel / protocol, it is possible for the remote phone management unit to initiate the transmission. This means that no user action is required. In addition, WAP Push offers the opportunity to use Service Loading (SL) content type for the transmission. By this transmission, the user agent at the mobile phone can be invoked without user intervention.

Upon receipt of a command signal from the remote phone management unit the mobile phone, e.g. the user agent, invokes the phone function contained in the command message. The invocation of the phone function will be executed via the local browser. As this browser supports the tags used on mobile adapted websites, no additional processing at the remote phone management unit or the mobile phone is necessary.

According to a further aspect, the present invention relates to a remote gateway comprising at least one browser unit for browsing websites, wherein the remote gateway has an access unit for access and control of the browser unit from a mobile device of a wireless communication network. The remote gateway is characterized in that the browser unit comprises an identification unit for identifying information relating to phone functions from the content of a website and in that the browser unit is connected to a remote phone management unit for managing phone functions and in that the browser unit of the remote gateway upon detection of a selection signal from the mobile phone directed to an option relating to phone functions within the content of the website triggers the remote phone management unit to generate and/or transmit a command message to the mobile device.

By providing the extension to a thin client architecture, it is possible to carry out functions within a thin client application, which are not available at the remote gateway. The access unit for access and control of the browser is preferably a remote display gateway, via which the user of a mobile device can view websites and can browse the net, e.g. the Internet.

The browser unit comprises an identification unit for identifying information relating to phone functions from the content of a website. The identification unit is preferably a parsing unit and may also comprise a storage unit for storing identifiers or tags relating to phone functions. In addition or alternatively the storage unit may store tags which are supported by the browser. By providing an identification unit which may have access to entries of a storage unit, the browser can identify tags which are not supported. Tags of functions to be executed on a mobile phone differ from tags for display or browsing functions.

According to another aspect, the present invention relates to a remote phone management unit for managing functions of a mobile phone of a mobile communication network. The remote phone management unit is characterized in that the remote phone management unit is connected to a remote gateway comprising a browser unit and an access unit for access and control of the browser unit from the mobile phone, in that the browser unit comprises an identification unit for identifying information relating to phone functions from the content of a website, and in that the remote phone management unit is connected to a communication unit for communicating with the mobile phone and in that remote phone management unit comprises a processing unit for generating and / or sending command messages to the mobile phone, wherein generating and/or transmitting of a command message to the mobile device is triggered by the browser unit of the remote gateway upon detection of a selection signal from the mobile phone directed to an option relating to phone functions within the content of the website.

By providing a remote management unit as a separate unit to the browser unit of a remote gateway and maybe even as a separate physical unit, only information, where phone functions are required will have to be diverted. The remaining information, in particular the content to be displayed via a remote display client on the mobile phone, can still be processed at the browser unit. The extension to the original architecture can thus be implemented without the need to redesign the browser unit completely. The extension can rather be used as an add-on to existing browsers.

The remote phone management unit may comprise a processing unit for analysing information received from the remote gateway, in particular from the browser unit of the remote gateway.

Analysing of information may comprise the parsing of content. The message to be sent to the mobile phone may be an error message or a command message triggering a phone function to be invoked at the mobile phone. The error message may be delivered, i.e. be displayed to the user via the thin client application by which the browser at the remote gateway is controlled.

The processing unit of the remote phone management unit may be connected to a push proxy gateway. By this connection, which may be established upon request, i.e. only when a message is to be delivered, an easy and secure delivery of command messages to the mobile phone can be realized.

Units of the remote phone management unit and of the remote gateway may at least partially be realized as hardware units and/or software components. Some units may also be combined.

The remote gateway and the remote phone management unit are preferably designed to be used for the inventive method.

Features and advantages which are described with respect to the inventive method also relate to the inventive remote gateway and/or the inventive remote phone management unit, where applicable, and vice versa.

The present invention will now be described again in detail with reference to the enclosed figures.
Figure 1 shows a system in which the inventive method can be used; and
Figure 2 shows a flowchart of one embodiment of the inventive method.

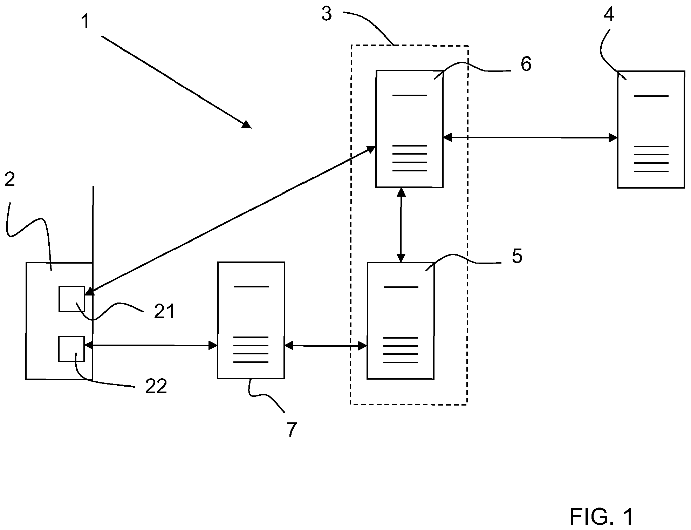

The system 1 shown in Figure 1 comprises a mobile device, depicted as a mobile phone 2. On the mobile phone 2 a remote display client 21 and a local browser 22 for browsing content and invoking functions available on the mobile phone 2 are provided. The remote display client 21 and the local browser 22 may be software installed on the mobile phone 2.

The system 1 further comprises a remote gateway 3. The remote gateway 3 is connected to or can access a network server 4, which might host a website or a portal. In the depicted system 1, the remote gateway 3 comprises a remote display gateway 6 and a remote phone manager 5, which can also be referred to as a management unit. The remote phone management unit 5 can also be separate to the remote gateway 3 but will be connected to the remote gateway 6. The remote phone manager 5 can communicate with the local browser 22 on the mobile phone 2. For this communication, the remote phone manager 5 may be connected to or have access to a push proxy gateway 7.

The display client 21 on the mobile phone 2 is a thin client application, i.e. allows remote access and display of a server based application, such as a browser, installed and executed on the remote gateway 3. The user may use the thin client application to browse sites on the Internet. This browsing is performed by the remote display gateway 6, in particular at a browser application installed and executed thereon. The browser application can also be installed on a separate unit (not shown). The content to be displayed to the user via the remote display client 21 is downloaded by the remote display gateway 6 from a network server 4. The thus available content will be made available for display on the mobile phone 2. The content itself, however, resides at the remote display gateway 6.

The thin client based browsing is thus performed by the remote display gateway 6, but can be manipulated via the mobile phone 2.

The browser at the remote display gateway 6 may have a storage and a processing unit for processing content downloaded from the server. In the storage unit tag or other identifiers may be stored, which can be used for the further processing of the content. In the processing unit an identification or comparison unit may be provided, wherein tags or other identifier are being processed to identify how the related content is to be processed.

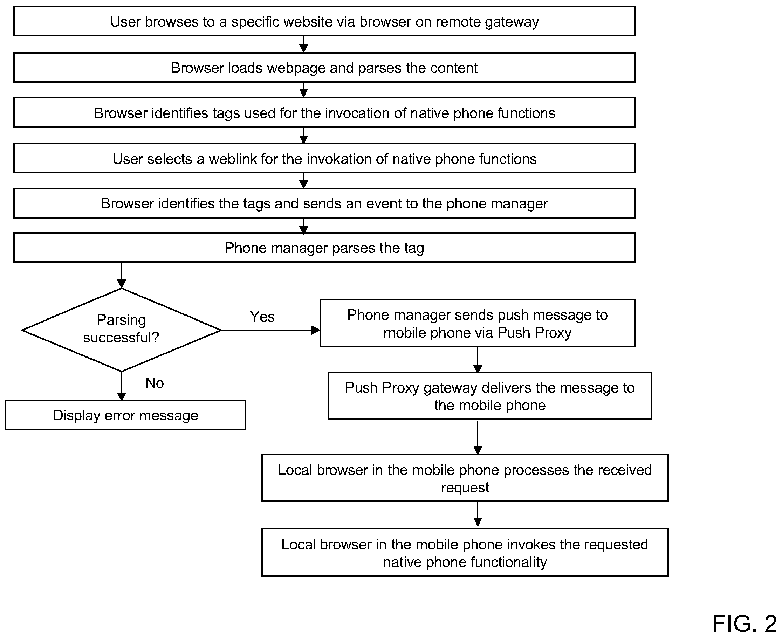

One embodiment of the invention will now be described with reference to Figure 2. While browsing the Internet via the thin client application the user will visit websites. While loading the webpage, the browser installed on the remote gateway 3 will parse the content, which might be in xhtml. During or after parsing the content, the browser will identify tags, which are used for invocation of so called native phone functions. On the webpage links relating to one of these native phone functions, for example "call number" may be displayed. The user will view these links via the remote display client 21 on his mobile phone 2. If the user now, via the mobile phone 2 selects such a link, the browser on the remote gateway 6 will identify the respective tag related to this link. As these tags are not supported by a standard browser, the browser would normally generate an error message. As the browser, however, identified the tag while parsing the content, no error message will be generated. Instead, the browser will send an event with the tag information details from the content to the remote phone management unit 5.

The remote phone management unit 5 will verify the content of the tag and parse the tag, i.e. the event details. In case the parsing fails an error page will be displayed to the user via the remote display gateway 6. If the parsing, however, is successful, a message will be sent from the remote phone management unit 5 to the mobile phone 2. This message may be a WAP push message and may be sent via a push proxy gateway 7 using the push access protocol. The tag content will be put into the content entity part of the push message. The push proxy gateway 7 delivers the message to the mobile phone 2. The local browser 22 in the mobile phone 2 processes the received message, in particular the received request and invokes the requested native phone functionality on the mobile phone 2. For the WAP push message preferably the Service Loading (SL) content type is selected. This is advantageous as with the user agent can be invoked without any user intervention. The standard WAP push infrastructure of a mobile operator will attend to delivering the message to the mobile phone 2 regardless of whether the mobile phone 2 is connected or not.

Some of the tags (Wireless Telephony Application Interface (WTAI) and Xhtml-mobile profile tags) that may be identified are shown in the following table together with the function related to the tags:

| | Tag | Function |
|---|---|---|
| WTAI tag | wtai://wp/mc | Make a call |
| | wtai://wp/sd | Send DTMF Tones |
| | wtai://wp/ap | Add a new phone book entry |
| Xhtml-mobile profile tags | The "sms:URL scheme | Send an SMS |
| | Tel URI scheme as defined within RFC 3966 | Make a call |
| | Mailto URL scheme as defined within RFC 2368 | To start a new mail |
| | The mmsto: "URL scheme | Send an MMS |

These tags that may be included in a homepage will be identified and located within the content by the browser, when parsing the content. If a user selects a link to make a call, the browser on the remote gateway 6 will identify the tag wtai://wp/mc and will determine that this tag is not supported. As a result, the remote phone manager 5 will be triggered by sending an event containing the tag information from the content. The phone manager will parse this tag and will send a push message to the mobile phone. At the mobile phone the local browser or user agent will invoke the call function of the mobile phone and the phone call originally intended by the user will be initiated.

With the present invention it will, hence, be possible for the user to experience the same behaviour when using thin client technology based browsing solutions for accessing websites developed for mobile usage (e.g. mobi domain) like the behaviour when the websites are being browsed from the mobile phone itself.

## Claims

1. Method for managing functions of a mobile phone (2) during a browsing session, wherein the browsing session is executed at a browser unit of a remote gateway (3) but controlled by the mobile phone (2), **characterized in that** the remote gateway (3) identifies information related to phone functions within the content of a website when loading the website and **in that** the remote gateway (3) upon detection of a selection signal from the mobile phone (2) directed to an option relating to phone functions within the content of the website triggers a remote phone management unit (5) to manage the phone function by generating and/or transmitting a command message to the mobile phone (2).

2. Method according to claim 1, **characterized in that** information related to phone functions is identified by tags within the content of the website.

3. Method according to claim 1, **characterized in that** the command message is transmitted from the remote phone management unit (5) via a push proxy gateway (7) to the mobile phone (2).

4. Method according to anyone of claims 1 or 2, **characterized in that** the mobile phone (2) upon receipt of a command signal from the remote phone management unit (5) invokes the phone function contained in the command message.

5. Remote gateway comprising at least one browser unit for browsing websites, wherein the remote gateway (3) has an access unit for access and control of the browser unit from a mobile device (2) of a wireless communication network, **characterized in that** the browser unit comprises an identification unit for identifying information relating to phone functions from the content of a website and **in that** the browser unit is connected to a remote phone management unit (5) for managing phone functions and **in that** the browser unit of the remote gateway upon detection of a selection signal from the mobile phone (2) directed to an option relating to phone functions within the content of the website triggers the remote phone management unit (5) to generate and/or transmit a command message to the mobile device.

6. Remote phone management unit for managing functions of a mobile phone of a mobile communication network, **characterized in that** the remote phone management unit (5) is connected to a remote gateway (3) comprising a browser unit and an access unit for access and control of the browser unit from the mobile phone (2), **in that** the browser unit comprises an identification unit for identifying information relating to phone functions from the content of a website, **in that** the remote phone management unit (5) is connected to a communication unit (7) for communicating with the mobile phone (2) and **in that** remote phone management unit (5) comprises a processing unit for generating and / or sending command messages to the mobile phone (2), wherein generating and/or transmitting of a command message to the mobile device is triggered by the browser unit of the remote gateway upon detection of a selection signal from the mobile phone (2) directed to an option relating to phone functions within the content of the website.

7. Remote phone management unit according to claim 6, **characterized in that** the remote phone management unit (5) comprises a processing unit for analysing information received from the remote gateway (3), in particular from the browser unit of the remote gateway (3).

8. Remote phone management unit according to anyone of claims 6 or 7, **characterized in that** the processing unit is connected to a push proxy gateway (7).

## Patentansprüche

1. Verfahren zum Verwalten von Funktionen eines Mobiltelefons (2) während einer Browsersitzung, wobei die Browsersitzung an einer Browsereinheit eines Ferngateways (3) ausgeführt wird, aber durch das Mobiltelefon (2) gesteuert wird, **dadurch gekennzeichnet, dass** das Ferngateway (3) Informationen, die sich auf Telefonfunktionen in dem Inhalt einer Webseite beziehen, identifiziert, wenn die Website geladen wird und dass das Ferngateway (3) auf Detektion eines Auswahlsignals von dem Mobiltelefon (2) hin, das auf eine Option gerichtet ist, die sich auf Telefonfunktionen in dem Inhalt der Website bezieht, eine Fern-Telefonverwaltungseinheit (5) triggert, um die Telefonfunktion durch Erzeugen und/oder Übermitteln einer Befehlsnachricht an das Mobiltelefon (2) zu verwalten.

2. Verfahren nach Anspruch 1, **dadurch gekennzeichnet, dass** Informationen betreffend Telefonfunktionen durch Tags in dem Inhalt der Webseite identifiziert werden.

3. Verfahren nach Anspruch 1, **dadurch gekennzeichnet, dass** die Befehlsnachricht von der Fern-Telefonverwaltungseinheit (5) über ein Push-Proxy-Gateway (7) an das Mobiltelefon (2) übermittelt wird.

4. Verfahren nach einem der Ansprüche 1 oder 2, **dadurch gekennzeichnet, dass** das Mobiltelefon (2) auf den Erhalt eines Befehlssignals von der Fern-Telefonverwaltungseinheit (5) hin die Telefonfunktion, die in der Befehlsnachricht enthalten ist, aktiviert.

5. Ferngateway umfassend zumindest eine Browsereinheit zum Browsen von Webseiten, wobei das Ferngateway (3) eine Zugangseinheit für den Zugang und die Steuerung der Browsereinheit von einem Mobiltelefon (2) eines drahtlosen Kommunikationsnetzes aufweist, **dadurch gekennzeichnet, dass** die Browsereinheit eine Identifikationseinheit zum Identifizieren von Informationen, die sich auf Telefonfunktionen beziehen, von dem Inhalt einer Webseite umfasst und dass die Browsereinheit mit einer Fern-Telefonverwaltungseinheit (5) zur Verwaltung von Telefonfunktionen verbunden ist und dass die Browsereinheit des Ferngateways auf die Detektion eines Auswahlsignals von dem Mobiltelefon (2) hin, das auf eine Option gerichtet ist, die sich auf Telefunktionen in dem Inhalt der Webseite bezieht, die Fern-Telefonverwaltungseinheit (5) triggert um eine Befehlsnachricht zu erzeugen und/oder an das Mobilgerät zu übertragen.

6. Fern-Telefonverwaltungseinheit (5) zur Veraltung von Funktionen eines Mobiltelefons eines mobilen Kommunikationsnetzes, **dadurch gekennzeichnet, dass** die Fern-Telefonverwaltungseinheit (5) mit einem Ferngateway (3) verbunden ist, das eine Browsereinheit und eine Zugangseinheit für den Zugang und die Steuerung der Browsereinheit von dem Mobiltelefon (2) aus umfasst, dass die Browsereinheit eine Identifikationseinheit zum Identifizieren von Informationen, die sich auf Telefonfunktionen beziehen, aus dem Inhalt einer Webseite umfasst, dass die Fern-Telefonverwaltungseinheit (5) mit einer Kommunikationseinheit (7) zum Kommunizieren mit dem Mobiltelefon (2) verbunden ist und dass die Fern-Telefonverwaltungseinheit (5) eine Verarbeitungseinheit zum Erzeugen und / oder Senden von Befehlsnachrichten an das Mobiltelefon (2) umfasst, wobei das Erzeugen und/oder Übermitteln einer Befehlsnachricht an das Mobiltelefon durch die Browsereinheit des Ferngateways auf Detektion eines Auswahlsignals von dem Mobiltelefon (2) hin, das auf eine Option gerichtet ist, die sich auf Telefonfunktionen in dem Inhalt der Webseite bezieht, getriggert wird.

7. Fern-Telefonverwaltungseinheit gemäß Anspruch 6, **dadurch gekennzeichnet, dass** die Fern-Telefonverwaltungseinheit (5) umfassend eine Verarbeitungseinheit zum Analysieren von Informationen, die von dem Remotegateway (3) empfangen wurden, insbesondere von der Browsereinheit des Ferngateways (3).

8. Fern-Telefonverwaltungseinheit (5) gemäß einem der Ansprüche 6 oder 7, **dadurch gekennzeichnet, dass** die Verarbeitungseinheit mit einem Push-Proxy-Gateway (7) verbunden ist.

## Revendications

1. Procédé de gestion de fonctions d'un téléphone mobile (2) au cours d'une session de navigation, dans lequel la session de navigation est exécutée dans une unité de navigateur d'une passerelle à distance (3) mais commandée par le téléphone mobile (2), **caractérisé en ce que** la passerelle à distance (3) identifie des informations relatives à des fonctions téléphoniques à l'intérieur d'un contenu d'un site Web lors du chargement du site Web et **en ce que** la passerelle à distance (3), lors de la détection d'un signal de sélection provenant du téléphone mobile (2) ayant trait à une option relative à des fonctions téléphoniques à l'intérieur du contenu du site Web, déclenche une unité de gestion de téléphone à distance (5) pour gérer la fonction de téléphone par une génération et/ou une transmission d'un message de commande au téléphone mobile (2).

2. Procédé selon la revendication 1, **caractérisé en ce que** des informations relatives à des fonctions téléphoniques sont identifiées par des balises à l'intérieur du contenu du site Web.

3. Procédé selon la revendication 1, **caractérisé en ce que** le message de commande est transmis de l'unité de gestion de téléphone à distance (5) au téléphone mobile (2) via une passerelle mandataire de poussée (7).

4. Procédé selon l'une quelconque des revendications 1 ou 2, **caractérisé en ce que** le téléphone mobile (2), lors de la réception d'un signal de commande en provenance de l'unité de gestion de téléphone à distance (5) implique la fonction de téléphone contenue dans le message de commande.

5. Passerelle à distance comprenant au moins une unité de navigateur pour naviguer dans des sites Web, dans lequel la passerelle à distance (3) a une unité d'accès pour accéder à l'unité de navigateur et pour la commander à partir d'un dispositif mobile (2) d'un réseau de communication sans fil, **caractérisée en ce que** l'unité de navigateur comprend une unité d'identification pour identifier des informations relatives à des fonctions téléphoniques à partir du contenu d'un site Web et **en ce que** l'unité de navigateur est connectée à une unité de gestion de téléphone à distance (5) pour gérer des fonctions téléphoniques et **en ce que** l'unité de navigateur de la passerelle à distance, lors de la détection d'un signal de sélection en provenance du téléphone mobile (2) ayant trait à une option relative à des fonctions téléphoniques à l'intérieur du contenu du site Web, déclenche l'unité de gestion de téléphone à distance (5) pour générer et/ou transmettre un message de commande au dispositif mobile.

6. Unité de gestion de téléphone à distance pour gérer des fonctions d'un téléphone mobile d'un réseau de communication mobile, **caractérisée en ce que** l'unité de gestion de téléphone à distance (5) est connectée à une passerelle à distance (3) comprenant une unité de navigateur et une unité d'accès pour accéder à l'unité de navigateur et pour la commander à partir du téléphone mobile (2), **en ce que** l'unité de navigateur comprend une unité d'identification pour identifier des informations relatives à des fonctions téléphoniques à partir du contenu d'un site Web, **en ce que** l'unité de gestion de téléphone à distance (5) est connectée à une unité de communication (7) pour communiquer avec le téléphone mobile (2) et **en ce que** l'unité de gestion de téléphone à distance (5) comprend une unité de traitement pour générer et/ou envoyer des messages de commande au téléphone mobile (2), dans lequel la génération et/ou la transmission d'un message de commande au dispositif mobile est déclenchée par l'unité de navigateur de la passerelle à distance lors de la détection d'un signal de sélection en provenance du téléphone mobile (2) ayant trait à une option relative à des fonctions téléphoniques à l'intérieur du contenu du site Web.

7. Unité de gestion de téléphone à distance selon la revendication 6, **caractérisée en ce que** l'unité de gestion de téléphone à distance (5) comprend une unité de traitement pour analyser des informations reçues de la passerelle à distance (3), en particulier de l'unité de navigateur de la passerelle à distance (3).

8. Unité de gestion de téléphone à distance selon l'une quelconque des revendications 6 ou 7, **caractérisée en ce que** l'unité de traitement est connectée à une passerelle mandataire de poussée (7).
